# EUROPEAN PATENT APPLICATION

(11) **EP 1 544 490 A2**
(43) Date of publication of application: **22.06.2005**
(21) Application number: 04028149.5
(22) Date of filing: 26.11.2004
(51) Int. Cl.: F16D 13/72, F16D 13/64

(54) **Segmented clutch plate for automatic transmission**

(30) Priority: 16.12.2003 US 737507
(71) Applicant: General Motors Corporation, Detroit MI 48265-3000 (US)
(72) Inventor: Samie, Farzad, Franklin Michigan 48025 (US)
(74) Representative: Manitz, Finsterwald & Partner GbR

(57) **Abstract**

The cooling performance of a wet disc clutch pack (10') is improved by using a segmented steel reaction plate (180). The segmented configuration of the reaction plate forms a triangular shaped groove (201) with an unsegmented reaction plate. The groove channels cooling lubricant in a manner to increase the convective heat transfer area for the flow of cooling lubricant, whereby to improve the cooling of the clutch pack.

## Description

### TECHNICAL FIELD

This invention relates to a wet disc clutch pack for a friction-launch automatic transmission.

### BACKGROUND OF THE INVENTION

Wet disc clutches are used in automatic transmissions to facilitate power transfer and gear shifting from one gear to another. Forward input clutch plates and reverse input clutch plates are known in prior transmissions. With such transmissions, both clutches embody a piston, wave plate, apply plate, friction plates, reaction plates, backing plate, return spring and snap rings. The number of friction plates is calculated based on the torque capacity and durability requirements for the transmission. The reaction plates used for most automatic transmission applications are steel and about 2 mm thick which is sufficient for shift energy absorption and dissipation.

For a friction-launch application using wet disc clutches, the torque converter of such prior automatic transmissions is replaced with an isolator assembly having input clutches which are used as the launching devices. The number of friction plates may be reduced by 1-2 plates because there is no longer a torque converter multiplication. In such prior friction-launch applications, 4-6 mm thick steel reaction plates are required for heat sink and to absorb the vehicle launch energy. Using thicker reaction plates will not normally enhance the clutch cooling capability and therefore a greater cooling lubricant flow rate is required to cool the clutch pack. This greater flow rate requires a bigger transmission oil pump. Thus higher parasitic losses due to plates running on oil and lower efficiency may be the result.

### SUMMARY OF THE INVENTION

The improvement of this invention is to increase the cooling performance of a clutch pack using one or more segmented steel reaction plates. One side of the steel plate has a segmented configuration, which allows cooling flow to enter when it is placed against a conventional or unsegemented steel plate. While friction launch applications normally require thicker reaction plates for heat sink, this invention suggests using the thinner conventional plates in combination with segmented reaction plates. This will increase the convective heat transfer area. For example, for a wet disc clutch pack normally requiring thicker reaction plates (i.e., 6 mm), one thinner conventional plate (i.e., 2 mm) and two of the segmented plates of this invention when used in combination results in 400% improvement in convective area.

Many different designs may be used for the segmented pattern with various depths. This invention teaches using 25-50 % of plate thickness to be used as a guideline for the depth of the triangular-shape grooves. This kind of groove (flow inlet area much larger than outlet area) will trap or impede the centrifugally-induced outward flow of cooling lubricant and cause the cooling fluid to wash over the entire surface of the adjacent plates and therefore increase cooling performance.

The ideal application for this invention is to utilize it as a starting device for input forward and reverse clutches, e.g., in the friction launch of a 6-speed automatic transmission. Prior clutches for such friction launch applications have used thicker reaction plates and a reduced number of friction plates. With this invention, however, the clutch when used in a 6-speed rear wheel drive (RWD) automatic transmission includes forward and reverse input clutches which are modified with the improved reaction plates of this invention. The torque converter is replaced with a flywheel and the isolator assembly, and vehicle launch is carried out with the improved clutch for forward and reverse directions.

The technical advantages of this invention, inter alia, include improvement in clutch cooling and therefore transmission durability in addition to fuel economy improvement due to use of a smaller transmission oil pump; and avoidance of thick (4-6 mm) reaction plates which would require a much higher cooling flow rate and a larger pump.

Accordingly, it is an object of this invention to provide a liquid flow cooled wet disc clutch pack for a friction launch transmission which comprises a sufficient number of friction plates to meet the torque capacity and durability requirements of the clutch pack; a first reaction plate adjacent to at least one of the friction plates and having one side sufficiently configured in convective heat exchange relation with the liquid flow to absorb at least a portion of the energy of the friction launch for at least partially cooling the clutch pack; and a second reaction plate having one side adjacent to the one side of the first reaction plate. The second reaction plate has on the one side thereof segments sufficiently configured in cooperation with the one side of the first reaction plate to control the flow of the liquid by increasing the convective surface area of a reaction plate side so that the flow washes over the one side of the first reaction plate in a manner to increase the cooling of the clutch pack.

With respect to the foregoing object and a normally needed plurality of first reaction plates, it is also an object of the invention to provide the second reaction plate with a predetermined thickness and with segments which protrude substantially 25-50% of the predetermined thickness, and form a triangular-shaped channel or groove so that when a first reaction plate is combined with a second reaction plate, the convective heat transfer area is sufficiently increased to reduce the number of first reaction plates needed.

Still another object of this invention is a segmented reaction plate for use in a wet disc clutch pack comprising an annular ring of predetermined thickness and having an inner periphery and an outer periphery connected on opposite sides of the predetermined thickness by opposed first and second surfaces, said first surface being substantially flat and said second surface being segmented into protruding configurations extending around the annular ring.

The above objects, and other objects, features and advantages of the present invention are readily apparent from the following detailed description of the best modes for carrying out the invention when taken in connection with the accompanying drawings.

### BRIEF DESCRIPTION OF THE DRAWINGS

FIGURE 1 is a perspective view of a segmented steel reaction plate in accordance with this invention for use in the forward clutch portion of a wet disc clutch pack in a friction launch transmission;

FIGURE 2 is a perspective view of a segmented steel reaction plate in accordance with this invention for use in the reverse clutch portion of a wet disc clutch pack in a friction launch transmission;

FIGURE 3 is a fragmentary cross-section of the input clutches in a wet disc clutch pack improved by this invention for use in a 6-speed automatic transmission; and

FIGURE 4 is a fragmentary cross-section of the input clutches in a wet disc clutch pack similar to Figure 3 but with the normally required thicker reaction plates for heat sink when used as friction launch clutches in a 6-speed automatic transmission.

### DESCRIPTION OF THE PREFERRED EMBODIMENTS

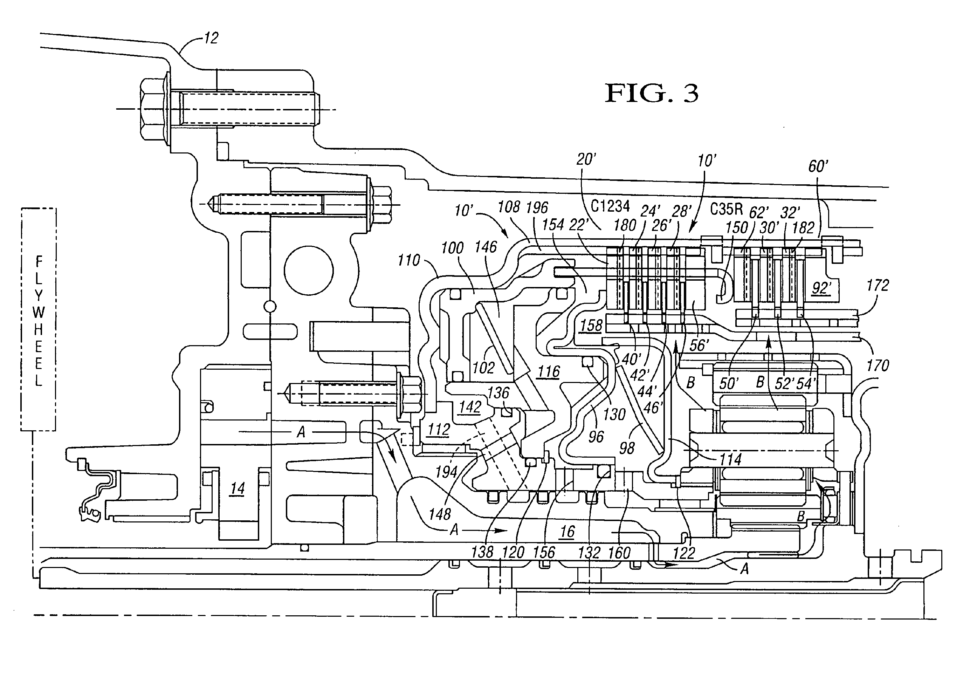

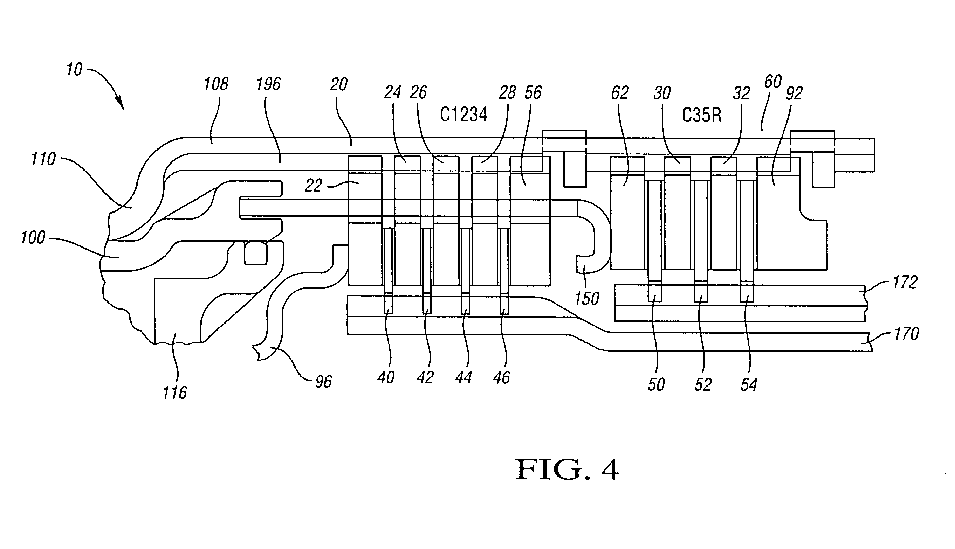

With reference to Figure 3 (improved) and Figure 4 (normal), wet disc clutch packs 10, 10' are used in automatic transmissions 12 to facilitate power transfer and gear shifting from one gear to another. Forward input clutches 20, 20' [C 1234] and reverse input clutches 60, 60' [C35R] of the transmission 12 are shown in Figures 3 and 4. As seen there, both clutches 20, 20', 60, 60' embody pistons 96, 100, wave plates 22, 22',62, 62' apply plates adjacent a wave plate not shown in clutches 10, 10' for transmission 12, friction plates 40-54 in clutch pack 10 and 40'-54' in clutch pack 10', and reaction plates 24-32 in clutch pack 10 and 29'-32' in clutch pack 10', backing plates 56, 92 in clutch pack 10, and 56', 92' in clutch pack 10', and return springs such as 98,102 and snap rings 120, 122 in Figure 3 which would also be included in the normal clutch pack of Figure 4. The number of friction plates such as 40-54 and 40'-54' are calculated based on the torque capacity and durability requirements. The steel reaction plates such as 24'-32' in Figure 3 are used for most automatic transmission applications and are each about 2 mm thick which is sufficient for shift energy absorption and dissipation.

The wet disc clutch 10' in Figure 3 is cooled by circulating lubricant such as oil. For this purpose, the transmission 12 has a pump 14 in oil-flow communication with the clutch pack 10' by way of a passageway 16 (arrows A). Oil flowing through the passageway terminates in a centrifugally-induced oil spray or turbulence (arrows B) due to the rotation of clutch pack 10'. A similar oil flow (not shown) would exist in the normal wet disc clutch 10 of Figure 4, but the oil pump 14 would necessarily be larger.

For friction-launch application of wet disc clutches (Figures 3 and 4), the torque converter is replaced with an isolator assembly or clutch pack 10, 10' and input clutches 20, 60 (Figure 4) and 20', 60' (Figure 3) are used as the launching devices. The number of friction plates 40-46 and 50-54 may be reduced by 1-2 plates in such clutches because there is no longer any converter multiplication. In the normal wet disc clutch of Figure 4, 4-6 mm thick steel reaction plates 24-32 are required for heat sink and to absorb the vehicle launch energy. But using thicker reaction plates 24-32 will not enhance the clutch cooling capability and therefore more cooling lubricant flow rate is required to cool the clutch pack 10. This means a larger capacity transmission oil pump is needed than that shown as 14 in Figure 3 in the improved clutch pack of this invention. Thus, higher parasitic losses and lower efficiency may be expected.

The forward input clutch 20' and the reverse input clutch 60' of wet disc clutch packs 10' are packaged in a rotatable housing 108 having an outer housing portion 110, an inner housing portion 112, a forward piston dam 114 and a rearward piston dam 116. The dams 114, 116 are fixed in place with respect to the inner and outer housings by snap rings 120, 122. Snap ring 120 holds the dam 116 in place with O-rings 136, 138 providing seals that divide the housing into a reverse apply chamber 142 having an oil supply passage 194 and a return chamber 146 having an oil supply passage 148. The return of piston 100 is aided by the reverse return spring 102.

Piston 100 has a plurality of piston fingers 150 which extend through notches or openings 152 in the forward clutch plates 20. The fingers serve to bias the wave plates 62' of the reverse input clutches 60'.

The forward input clutch piston 96 cooperates with O-rings 130 and 132 and the dams 114, 116 to divide the housing 108 into a forward clutch apply chamber 154 having an oil supply passage 156 and a forward return chamber 158 having oil release passage 160. Piston 96 biases wave plates 22' of the forward input clutch 20'. The return of piston 96 is aided by the forward return spring 98.

The friction plates 40'-54' cooperate respectively with the reaction plates 24'-28' to launch the vehicle forward. In particular, the rotatable housing 108 cooperates through the forward and reverse clutches 20' and 60' to drive respectively the C 1234 hub 170 and the C35R hub 172. Hubs 170, 172 are relatively rotatable with respect to the housing 108. When the forward input clutch 20' is being biased by piston 96, reaction plates 24'-28' frictionally bind with friction plates 40'-46' and hub 170 is locked up for rotation with housing 108. The transmission is thus launched in the forward direction.

Similarly, the friction plates 50'-54' cooperate respectively with reaction plates and 30'-32' to launch the vehicle in reverse. In particular, the rotatable housing 108 cooperates through the reverse clutch 60' to drive the C35R hub 172. The transmission is thus launched in the reverse direction.

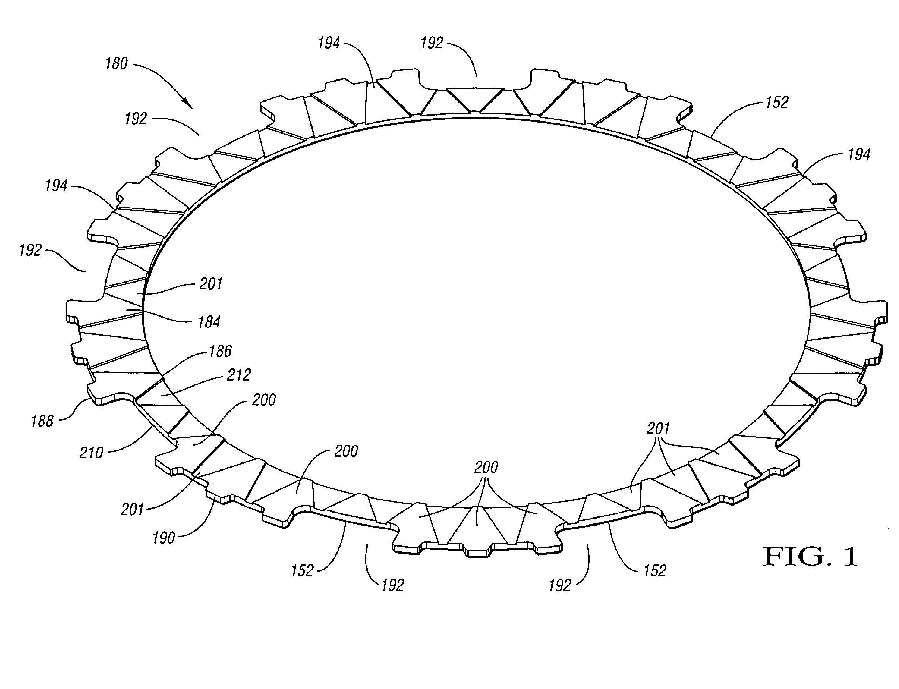

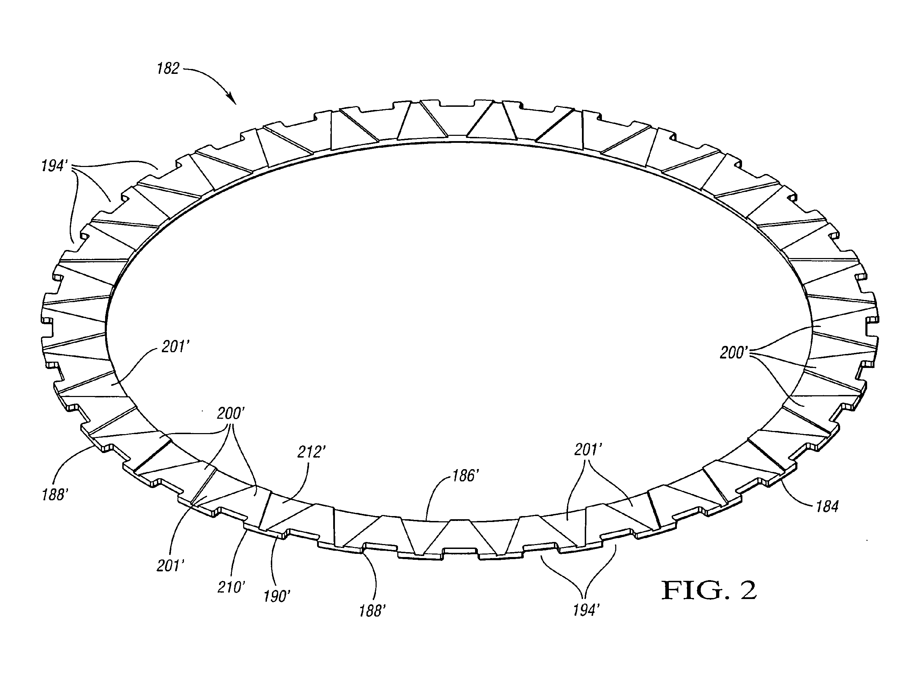

With reference to Figures 1 and 2, the improved liquid flow cooled wet disc clutch pack 10' of this invention has segmented clutch plates 180, 182. For use in the friction launch transmission shown in figure 3 a segmented clutch plate 180 and/or 182 is adapted to lay adjacent a respective normal 2 mm thick reaction plate 24'-32'.

Forward clutch plate 180 (Figure 1) is configured as a circular ring 184 having an inner circumference 186, an outer circumference or periphery 188 and a thickness 190 of about 2 mm. The outer circumference or periphery is notched at spaced points 192 to accommodate the projecting fingers 150 of the piston 100 and at spaced points 194 to accommodate guides 196 on outer housing 110 for the reciprocable movement of the plates 180. Segments 200 are configured to protrude substantially 25-50% of the plate's thickness to abut the adjoining surface of a respective regular forward reaction plate 24'-28'.

Reverse clutch plate 182 (Figure 2) is configured with a circular ring 184 having an inner circumference 186', an outer circumference or periphery 188' and a thickness 190' of about 2 mm. Segments 200' are configured to protrude substantially 25-50% of the plate's thickness to abut the adjoining surface of a respective normal reverse reaction plate 30'-32'. The outer circumference or periphery is notched at spaced points 194' to accommodate guides 196 on outer housing 110 for the reciprocable movement of the plates 182. The improved clutch pack 10' also has a sufficient number of friction plates 40'-46' (forward) and 50'-54' (reverse) selected to meet the torque capacity and durability requirements of the clutch pack.

The flat sides of forward reaction plates 24'-28' are respectively frictionally engageable with the friction plates 40'-46' and have the other side sufficiently configured in convective heat exchange relation with the liquid flow B moving radially outwardly between the normal reaction plates 24'-28' and the segmented reaction plates 180 to absorb at least a portion of the energy of the friction launch and for at least partially cooling the clutch pack 10'. In particular, each segmented reaction plate 180 has a flat side adjacent to a friction plate and a segmented side adjacent to a respective one of the reaction plates. On the segmented side thereof the segments are sufficiently configured into triangular protrusions which in cooperation with a flat side of an adjacent reaction plate impede radially the outward flow B of the cooling oil between a reaction plate and an adjacent segmented plate. The segments increase the convective surface area of at least the segmented plate so that the flow washes over one side of a normal thickness reaction plate in a manner to increase and improve the cooling of the clutch pack.

Each segmented plate has pairs of protruding triangular segments 200, 200' which cooperate to form triangular-shaped grooves 201, 201' which converge in the radially outward direction to impede the outward flow of cooling liquid or oil. The liquid flow is in a direction between the normal or regular plates and the segmented plates. Since the flow is retarded or impeded by the groove-like configurations of the protruding segments, the cooling is forced between the facing surfaces of the plates, whereby to improve the cooling with a smaller capacity pump 14.

The combination of a regular or normal reaction plate with a segmented reaction plate increases the convective heat transfer area, so that the number of normal reaction plates needed in the clutch pack 10' can be reduced.

In summary, the clutch pack is improved by a segmented reaction plate. The segmented reaction plate is a circular ring with two surfaces. The first surface is substantially flat, and the second surface is segmented by protruding or raised configurations which extend around the ring. The ring is steel, and the protruding configurations are spaced triangles. The space between each pair of triangles is configured as a channel or groove on the segmented surface. The groove converges from the inner periphery of the ring toward the outer periphery of the ring. The convergence of the channel impedes the flow of radially outwardly moving oil and causes the oil to spread over the increased convective area of the segmented plate to improve cooling of the clutch.

While the best modes for carrying out the invention have been described in detail, those familiar with the art to which this invention relates will recognize various alternative designs and embodiments for practicing the invention within the scope of the appended claims.

## Claims

1. A liquid flow cooled wet disc clutch pack for a friction launch transmission comprising:
a sufficient number of friction plates to meet the torque capacity and durability requirements of the clutch pack;
a first reaction plate adjacent to at least one of the friction plates and having one side sufficiently configured in convective heat exchange relation with the liquid flow to absorb at least a portion of the energy of the friction launch for at least partially cooling the clutch pack; and
a second reaction plate having one side adjacent to said one side of the first reaction plate, said second reaction plate having on said one side thereof segments sufficiently configured in cooperation with said one side of the first reaction plate to increase the convective surface area of at least the second reaction plate so that the flow washes over said one side of the first reaction plate in a manner to increase the cooling of the clutch pack.

2. The clutch pack of claim 1 wherein the second reaction plate has a predetermined thickness and the segments protrude substantially 25 - 50% of said thickness.

3. The clutch pack of claim 2 wherein each of a pair of said segments cooperate to form a triangular-shaped groove.

4. The clutch pack of claim 3 wherein the liquid flow is in one direction between the first and second reaction plates and said pair of segments is configured to retard the flow of liquid in said one direction.

5. The clutch pack of claim 1 wherein one first reaction plate is combined with two second reaction plates to increase the convective heat transfer area, whereby to reduce the number of first reaction plates needed.

6. A segmented reaction plate for use in a wet disc clutch pack comprising an annular ring of predetermined thickness and having an inner periphery and an outer periphery connected on opposite sides of the predetermined thickness by opposed first and second surfaces, said first surface being substantially flat, and said second surface being segmented into protruding configurations extending around the annular ring.

7. The segmented reaction plate of claim 6 wherein the annular ring is steel.

8. The segmented reaction plate of claim 6 wherein the protruding configurations are spaced triangles.

9. The segmented reaction plate of claim 8 wherein the protrusion of each protruding configuration is 25-50% of the predetermined thickness.

10. The segmented reaction plate of claim 8 wherein the space between each pair of triangles is configured as a channel on said second surface converging from said inner periphery toward said outer periphery.

11. A segmented reaction plate for use in a wet disc clutch pack comprising a steel annular ring of predetermined thickness and having an inner periphery and an outer periphery connected on opposite sides of the predetermined thickness by opposed first and second surfaces, said first surface being substantially flat, and said second surface being segmented into protruding spaced triangles extending around the annular ring; and wherein the protrusion of each protruding spaced triangle is 25-50% of the predetermined thickness.
